# EUROPÄISCHE PATENTANMELDUNG

(11) **EP 3 708 938 A1**
(43) Veröffentlichungstag der Anmeldung: **16.09.2020**
(21) Anmeldenummer: 19162861.9
(22) Anmeldetag: 14.03.2019
(51) Int. Cl.: F27D 3/00, B22F 3/00, B22F 5/00, F27D 3/10

(54) **HERSTELLEN EINES ELEKTROBLECHS**

(71) Anmelder: Siemens Aktiengesellschaft, 80333 München (DE)
(72) Erfinder: Kinzler, Edwin-Carl, 73262 Reichenbach (DE); Vollmer, Rolf, 36129 Gersfeld (DE)

(57) **Zusammenfassung**

Die Erfindung betrifft ein Verfahren und eine Fertigungsanlage (1) zum Herstellen eines Elektroblechs (3). Bei dem Verfahren werden wenigstens zwei unterschiedliche metallhaltige sinterfähige Ausgangsmaterialien (15, 16) lückenlos auf einen Ausfüllbereich (17) einer Sinterunterlage (19) aufgebracht, wobei auf je zwei aneinander grenzende Teilbereiche (21, 22) des Ausfüllbereichs (17) unterschiedliche Ausgangsmaterialien (15, 16) aufgebracht werden. Die auf den Ausfüllbereich (17) aufgebrachten Ausgangsmaterialien (15, 16) werden durch Sintern zu dem Elektroblech (3) gehärtet und verbunden.

## Beschreibung

Die Erfindung betrifft ein Verfahren und eine Fertigungsanlage zum Herstellen eines Elektroblechs.

Magnetkerne für elektrische Maschinen sind meist als so genannte Blechpakete ausgebildet, die aus dünnen, gegeneinander elektrisch isolierten Elektroblechen bestehen, um von zeitlich variierenden Magnetfeldern erzeugte Wirbelströme in den Magnetkernen zu reduzieren. Elektrobleche werden in der Regel aus einem Walzband herausgeschnitten beziehungsweise gestanzt. Dabei entsteht viel Abfall. Ferner können damit nur Elektrobleche mit einer herstellungsbedingten Mindestdicke von beispielsweise etwa 100 pm hergestellt werden. Außerdem können keine Elektrobleche hergestellt werden, die in variabel gestaltbaren Bereichen aus unterschiedlichen Materialien bestehen.

Der Erfindung liegt die Aufgabe zugrunde, ein verbessertes Verfahren zum Herstellen eines Elektroblechs und eine Fertigungsanlage zur Durchführung des Verfahrens anzugeben, die insbesondere die Herstellung von Elektroblechen ermöglichen, die eine sehr geringe Dicke haben und in variabel gestaltbaren Bereichen aus unterschiedlichen Materialien bestehen.

Die Aufgabe wird erfindungsgemäß durch ein Verfahren mit den Merkmalen des Anspruchs 1 und eine Fertigungsanlage mit den Merkmalen des Anspruchs 15 gelöst.

Vorteilhafte Ausgestaltungen der Erfindung sind Gegenstand der Unteransprüche.

Bei dem erfindungsgemäßen Verfahren zum Herstellen eines Elektroblechs werden wenigstens zwei unterschiedliche metallhaltige sinterfähige Ausgangsmaterialien lückenlos auf einen Ausfüllbereich einer Sinterunterlage aufgebracht, wobei auf je zwei aneinander grenzende Teilbereiche des Ausfüllbereichs unterschiedliche Ausgangsmaterialien aufgebracht werden. Anschließend werden die auf den Ausfüllbereich aufgebrachten Ausgangsmaterialien durch Sintern zu dem Elektroblech gehärtet und verbunden. Unter einem sinterfähigen Material wird ein Material verstanden, das durch Sintern verfestigt werden kann.

Erfindungsgemäß wird ein Elektroblech also in einem so genannten additiven Verfahren hergestellt, bei dem verschiedene Bereiche des Elektroblechs aus unterschiedlichen Ausgangsmaterialien gefertigt werden. Dabei werden die Ausgangsmaterialien jeweils auf Teilbereiche einer Sinterunterlage aufgebracht und danach gesintert und dadurch zu dem Elektroblech gehärtet und verbunden. Dadurch können aus unterschiedlichen Ausgangsmaterialien bestehende Bereiche des Elektroblechs flexibel gestaltet und hinsichtlich ihrer Form und ihren physikalischen Eigenschaften wie Festigkeit, elektrischer und magnetischer Charakteristik und Wärmeleitfähigkeit den jeweiligen Anforderungen angepasst werden. Insbesondere können Elektrobleche mit sehr filigran ausgebildeten Bereichen spezieller Eigenschaften hergestellt werden. Dadurch können beispielsweise Magnetkerne mit verbesserter Entwärmung und reduzierter magnetischer Streuung hergestellt werden. Ferner können sehr dünne Elektrobleche hergestellt werden, beispielsweise im Bereich von 50 µm bis 500 pm. Gegenüber herkömmlichen Stanzverfahren zum Herstellen von Elektroblechen kann ferner der Materialabfall deutlich reduziert werden, da die Ausgangsmaterialien nur auf die für sie vorgesehenen Teilbereiche der Sinterunterlage aufgebracht werden. Gegenüber Stanzverfahren und Siebdruckverfahren zum Herstellen von Elektroblechen werden außerdem die Werkzeugkosten reduziert, da keine Stanz- oder Siebwerkzeuge benötigt werden, und die Herstellungsdauer wird verringert.

Bei einer Ausgestaltung der Erfindung sind die Ausgangsmaterialien Pasten, beispielsweise Pasten, deren Feststoffanteile jeweils von einem Gemisch eines Metallpulvers und eines Keramikpulvers gebildet werden. Die Pasten werden beispielsweise mit Spritzdüsen auf die Sinterunterlage gespritzt. Beispielsweise wird dazu ein Aufteilungsmuster der Aufteilung des Ausfüllbereichs in die Teilbereiche mit einer Zuordnung jedes Teilbereichs zu einem Ausgangsmaterial erstellt und die Spritzdüsen werden gemäß dem Aufteilungsmuster derart gesteuert, dass jeder Teilbereich mit dem ihm zugeordneten Ausgangsmaterial bespritzt wird. Ferner kann vorgesehen sein, dass die auf die Sinterunterlage gespritzten Ausgangsmaterialien vor dem Sintern getrocknet werden.

Bei einer alternativen Ausgestaltung der Erfindung sind die Ausgangsmaterialien Pulver, beispielsweise Metallpulver. Die unterschiedlichen Pulver werden beispielsweise nacheinander auf jeweils mindestens einen Teilbereich des Ausfüllbereichs aufgebracht. Dabei wird beispielsweise jedes Ausgangsmaterial auf den mindestens einen Teilbereich des Ausfüllbereichs aufgebracht, indem das Ausgangsmaterial zunächst über dem gesamten Ausfüllbereich aufgetragen wird, danach ein Bindermaterial über dem mindestens einen Teilbereich in das Ausgangsmaterial eingedruckt wird, anschließend das Bindermaterial ausgehärtet wird und abschließend das nicht mit Bindermaterial verfestigte Ausgangsmaterial entfernt wird. Beispielsweise wird das Bindermaterial durch einen chemischen Prozess ausgehärtet. Ferner kann dem Bindermittel zum Aushärten Energie zugeführt werden, beispielsweise durch Bestrahlung mit Ultraviolettstrahlung. Das Bindermittel wird beispielsweise mit Spritzdüsen in ein Ausgangsmaterial gespritzt. Dazu wird beispielsweise ein Aufteilungsmuster der Aufteilung des Ausfüllbereichs in die Teilbereiche mit einer Zuordnung jedes Teilbereichs zu einem Ausgangsmaterial erstellt und die Spritzdüsen werden für jedes Ausgangsmaterial gemäß dem Aufteilungsmuster derart gesteuert, dass Bindermaterial über jedem dem Ausgangsmaterial zugeordneten Teilbereich in das Ausgangsmaterial gespritzt wird. Ferner wird beispielsweise nach dem Auftragen eines Ausgangsmaterials auf einen Teilbereich des Ausfüllbereichs, in dem bereits ein anderes Ausgangsmaterial aufgebracht ist, das auf das andere Ausgangsmaterial aufgetragene Ausgangsmaterial entfernt, bevor Bindermaterial in das Ausgangsmaterial eingedruckt wird.

Bei allen oben genannten Ausgestaltungen des erfindungsgemäßen Verfahrens kann ferner vorgesehen sein, dass das Elektroblech nach dem Sintern mit einem elektrisch isolierenden Lack, beispielsweise mit einem Backlack, beschichtet wird. Durch das Auftragen des Lacks nach dem Sintern wird vorteilhaft eine Diffusion von Partikeln zwischen dem Elektroblech und dem Lack vermieden, die beispielsweise bei einem Aufbringen des Lacks während des Sinterns auftreten kann. Die Lackschichten der Elektrobleche können ferner auch zur gegenseitigen Verfestigung der Elektrobleche zu einem Blechpaket dienen, insbesondere wenn als Lack ein Backlack verwendet wird.

Eine erfindungsgemäße Fertigungsanlage zum Herstellen eines Elektroblechs mit dem erfindungsgemäßen Verfahren umfasst eine Materialaufbringvorrichtung, die dazu eingerichtet ist, die Ausgangsmaterialien lückenlos auf den Ausfüllbereich der Sinterunterlage derart aufzubringen, dass auf je zwei aneinander grenzende Teilbereiche des Ausfüllbereichs unterschiedliche Ausgangsmaterialien aufgebracht werden. Ferner umfasst die Fertigungsanlage eine Sintereinheit, die dazu eingerichtet ist, die auf den Ausfüllbereich aufgebrachten Ausgangsmaterialien durch Sintern zu dem Elektroblech zu härten und zu verbinden. Eine derartige Fertigungsanlage ermöglicht die Durchführung des erfindungsgemäßen Verfahrens mit den oben bereits genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Ablauflaufdiagramm eines ersten Ausführungsbeispiels eines Verfahrens zum Herstellen eines Elektroblechs,
FIG 2 schematisch ein erstes Ausführungsbeispiel einer Fertigungsanlage zum Herstellen von Elektroblechen,
FIG 3 ein Ablauflaufdiagramm eines zweiten Ausführungsbeispiels eines Verfahrens zum Herstellen eines Elektroblechs,
FIG 4 schematisch ein zweites Ausführungsbeispiel einer Fertigungsanlage zum Herstellen von Elektroblechen.

Einander entsprechende Teile sind in den Figuren mit denselben Bezugszeichen versehen.

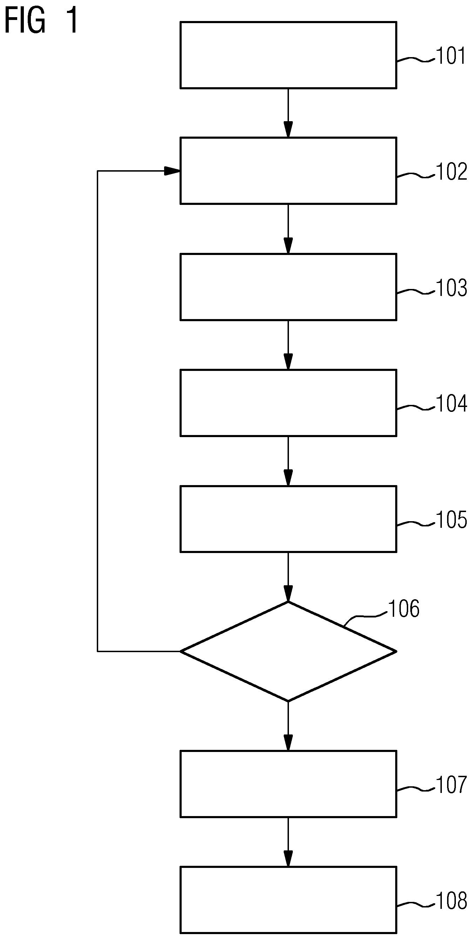

Figur 1 zeigt ein Ablauflaufdiagramm eines ersten Ausführungsbeispiels des erfindungsgemäßen Verfahrens zum Herstellen eines Elektroblechs 3.

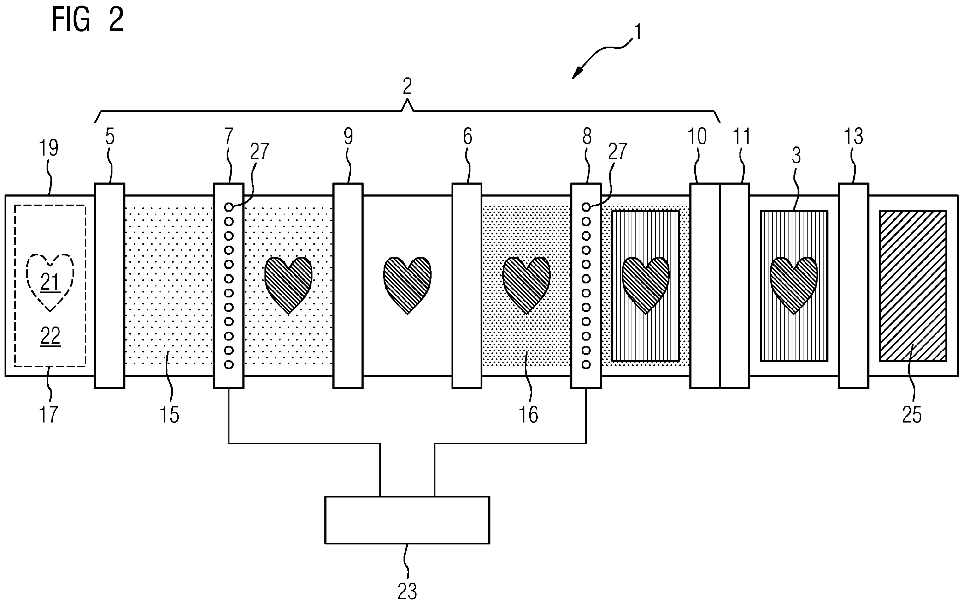

Figur 2 zeigt schematisch ein Ausführungsbeispiel einer Fertigungsanlage 1 zum Herstellen von Elektroblechen 3 gemäß dem ersten Ausführungsbeispiel des Verfahrens. Die Fertigungsanlage 1 umfasst eine Materialaufbringvorrichtung 2, eine Sintereinheit 11 und eine Lackiereinheit 13. Die Materialaufbringvorrichtung 2 umfasst mehrere Pulverauftragungseinheiten 5, 6, Pulververfestigungseinheiten 7, 8 und Pulverentfernungseinheiten 9, 10 und eine Steuereinheit 23, wobei in Figur 2 nur je zwei Pulverauftragungseinheiten 5, 6, Pulververfestigungseinheiten 7, 8 und Pulverentfernungseinheiten 9, 10 dargestellt sind.

Bei dem Verfahren werden mit der Fertigungsanlage 1 mehrere unterschiedliche metallhaltige sinterfähige Ausgangsmaterialien 15, 16 lückenlos auf einen Ausfüllbereich 17 einer Sinterunterlage 19 aufgebracht, wobei auf je zwei aneinander grenzende Teilbereiche 21, 22 des Ausfüllbereichs 17 unterschiedliche Ausgangsmaterialien 15, 16 aufgebracht werden. Die auf den Ausfüllbereich 17 aufgebrachten Ausgangsmaterialien 15, 16 werden durch Sintern zu dem Elektroblech 3 gehärtet und verbunden. Die Ausgangsmaterialien 15, 16 sind bei den in den Figur 1 und 2 dargestellten Ausführungsbeispielen des erfindungsgemäßen Verfahrens und der Fertigungsanlage 1 Pulver, beispielsweise Metallpulver.

In einem ersten Verfahrensschritt 101 wird ein Aufteilungsmuster der Aufteilung des Ausfüllbereichs 17 in die Teilbereiche 21, 22 mit einer Zuordnung jedes Teilbereichs 21, 22 zu einem Ausgangsmaterial 15, 16 erstellt. In Figur 2 ist beispielhaft ein gestrichelt dargestelltes Aufteilungsmuster gezeigt, bei dem ein rechteckiger Ausfüllbereich 17 in zwei Teilbereiche 21, 22 aufgeteilt ist. Ein erster Teilbereich 21 hat eine herzförmige Form und ist einem ersten Ausgangsmaterialien 15 zugeordnet, der zweite Teilbereich 22 umgibt den ersten Teilbereich 21 und ist einem zweiten Ausgangsmaterial 16 zugeordnet. Das Aufteilungsmuster wird beispielsweise in Form digitaler Daten in einem Speicher der Steuereinheit 23 abgelegt.

In einem zweiten Verfahrensschritt 102 wird mit einer Pulverauftragungseinheit 5, 6 eines der Ausgangsmaterialien 15, 16 über dem gesamten Ausfüllbereich 17 aufgetragen. Falls dabei Ausgangsmaterial 15, 16 auf einen Teilbereich 21, 22 des Ausfüllbereichs 17 aufgetragen wird, in dem bereits ein anderes Ausgangsmaterial 15, 16 aufgebracht ist, wird ferner das auf das andere Ausgangsmaterial 15, 16 aufgetragene Ausgangsmaterial 15, 16 entfernt, beispielsweise mit einem Rackel. In dem in Figur 2 dargestellten Beispiel wird das erste Ausgangsmaterial 15 von einer ersten Pulverauftragungseinheit 5 auf den gesamten Ausfüllbereich 17 aufgetragen. Das zweite Ausgangsmaterial 16 wird von einer zweiten Pulverauftragungseinheit 6 über dem gesamten Ausfüllbereich 17 aufgetragen, wobei es auch auf das bereits auf den ersten Teilbereich 21 aufgebrachte erste Ausgangsmaterial 15 aufgetragen wird. Daher wird das von der zweiten Pulverauftragungseinheit 6 auf das erste Ausgangsmaterial 15 im ersten Teilbereich 21 aufgetragene zweite Ausgangsmaterial 16 anschließend wieder entfernt.

In einem dritten Verfahrensschritt 103 wird mit einer Pulververfestigungseinheit 7, 8 ein Bindermittel über jedem Teilbereich 21, 22, dem das in dem vorhergehenden Verfahrensschritt 102 aufgetragene Ausgangsmaterial 15, 16 zugeordnet ist, in das Ausgangsmaterial 15, 16 eingedruckt. Jede Pulververfestigungseinheit 7, 8 weist beispielsweise Spritzdüsen 27 auf, mit denen Bindermaterial in das jeweilige Ausgangsmaterial 15, 16 gespritzt wird. Die Spritzdüsen 27 werden von der Steuereinheit 23 gemäß dem Aufteilungsmuster derart gesteuert, dass Bindermaterial nur jeweils über jedem dem jeweiligen Ausgangsmaterial 15, 16 zugeordneten Teilbereich 21, 22 in das Ausgangsmaterial 15, 16 gespritzt wird. In dem in Figur 2 dargestellten Beispiel wird von einer ersten Pulververfestigungseinheit 7 Bindermaterial nur über dem ersten Teilbereich 21 in das erste Ausgangsmaterial 15 eingedruckt, und von einer zweiten Pulververfestigungseinheit 8 wird Bindermaterial nur über dem zweiten Teilbereich 22 in das zweite Ausgangsmaterial 16 eingedruckt.

In einem vierten Verfahrensschritt 104 wird das in dem vorhergehenden Verfahrensschritt 103 eingedruckte Bindermaterial ausgehärtet. Beispielsweise wird das Bindermaterial durch einen chemischen Prozess ausgehärtet. Ferner kann vorgesehen sein, dass dem Bindermittel bei dem Aushärten Energie zugeführt wird, beispielsweise durch Bestrahlung mit Ultraviolettstrahlung. Der vierte Verfahrensschritt 104 wird beispielsweise von derselben Pulververfestigungseinheit 7, 8 wie der vorhergehende Verfahrensschritt 103 durchgeführt.

In einem fünften Verfahrensschritt 105 wird das nicht mit Bindermaterial verfestigte Ausgangsmaterial 15, 16 von einer Pulverentfernungseinheit 9, 10 entfernt. Beispielsweise weist jede Pulverentfernungseinheit 9, 10 dazu eine Pulverabsaugvorrichtung auf, mit der nicht verfestigtes Pulver abgesaugt wird. In dem in Figur 2 dargestellten Beispiel wird von einer ersten Pulverentfernungseinheit 9 nicht verfestigtes erstes Ausgangsmaterial 15 entfernt, und von einer zweiten Pulverentfernungseinheit 10 wird nicht verfestigtes zweites Ausgangsmaterial 16 entfernt. Das in dem fünften Verfahrensschritt 105 entfernte Pulver wird gesammelt und wiederverwertet.

In einem sechsten Verfahrensschritt 106 wird geprüft, ob bereits auf jeden Teilbereich 21, 22 das ihm zugeordnete Ausgangsmaterial 15, 16 aufgebracht ist. Wenn dies der Fall ist, wird das Verfahren mit einem siebten Verfahrensschritt 107 fortgesetzt. Andernfalls wird wieder der zweite Verfahrensschritt 102 für ein noch nicht verwendetes Ausgangsmaterial 15, 16 durchgeführt. Mit anderen Worten werden die Verfahrensschritte 102 bis 105 also nacheinander für jedes Ausgangsmaterial 15, 16 durchgeführt, das wenigstens einem Teilbereich 21, 22 zugeordnet ist, bis auf jeden Teilbereich 21, 22 das ihm zugeordnete Ausgangsmaterial 15, 16 aufgebracht ist. In dem in Figur 2 dargestellten Beispiel werden die Verfahrensschritte 102 bis 105 zunächst von der ersten Pulverauftragungseinheit 5, der ersten Pulververfestigungseinheit 7 und der ersten Pulverentfernungseinheit 9 für das erste Ausgangsmaterial 15 durchgeführt, wodurch das erste Ausgangsmaterial 15 auf den ersten Teilbereich 21 des Ausfüllbereichs 17 aufgebracht wird. Anschließend werden die Verfahrensschritte 102 bis 105 von der zweiten Pulverauftragungseinheit 6, der zweiten Pulververfestigungseinheit 8 und der zweiten Pulverentfernungseinheit 10 für das zweite Ausgangsmaterial 16 durchgeführt, wodurch das zweite Ausgangsmaterial 16 auf den zweiten Teilbereich 22 des Ausfüllbereichs 17 aufgebracht wird.

In dem siebten Verfahrensschritt 107 werden die auf den Ausfüllbereich 17 aufgebrachten Ausgangsmaterialien 15, 16 von der Sintereinheit 11 gesintert und dadurch zu dem Elektroblech 3 gehärtet und verbunden. Dazu weist die Sintereinheit 11 einen Sinterofen auf, in den die Sinterunterlage 19 mit den auf sie aufgebrachten Ausgangsmaterialien 15, 16 gefahren wird.

In einem achten Verfahrensschritt 108 wird das Elektroblech 3 von der Lackiereinheit 13 mit einem elektrisch isolierenden Lack 25, beispielsweise einem Backlack, beschichtet.

In einem weiteren Ausführungsbeispiel einer Fertigungsanlage 1 zum Herstellen von Elektroblechen 3 gemäß dem anhand von Figur 1 beschriebenen Verfahren weist die Materialaufbringvorrichtung 2 in Abwandlung der in Figur 2 gezeigten Fertigungsanlage 1 nur je eine Pulverauftragungseinheit 5, Pulververfestigungseinheit 7 und Pulverentfernungseinheit 9 auf. Die Verfahrensschritte 102 bis 105 werden dann von der Pulverauftragungseinheit 5, der Pulververfestigungseinheit 7 und der Pulverentfernungseinheit 9 nacheinander für jedes Ausgangsmaterial 15, 16 durchgeführt, wobei der Pulverauftragungseinheit 5 vor jeder erneuten Durchführung der Verfahrensschritte 102 bis 105 die Sinterunterlage 19 mit den vorher bereits aufgebrachten Ausgangsmaterialien 15, 16 zugeführt wird.

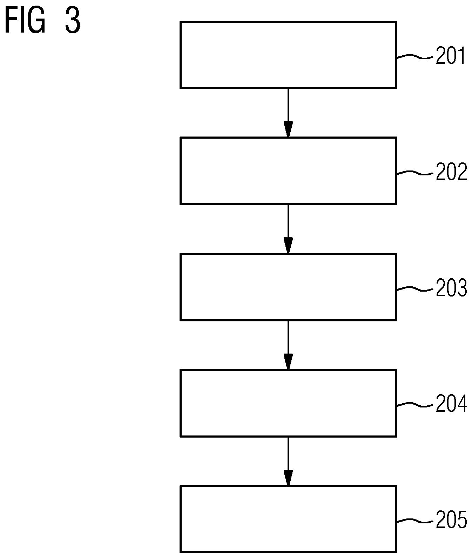

Figur 3 zeigt ein Ablauflaufdiagramm eines zweiten Ausführungsbeispiels des erfindungsgemäßen Verfahrens zum Herstellen eines Elektroblechs 3. Auch bei diesem Ausführungsbeispiel werden unterschiedliche metallhaltige sinterfähige Ausgangsmaterialien 15, 16 lückenlos auf einen Ausfüllbereich 17 einer Sinterunterlage 19 aufgebracht, wobei auf je zwei aneinander grenzende Teilbereiche 21, 22 des Ausfüllbereichs 17 unterschiedliche Ausgangsmaterialien 15, 16 aufgebracht werden. Im Unterschied zu dem ersten Ausführungsbeispiel sind die Ausgangsmaterialien 15, 16 jedoch keine Pulver, sondern Pasten, beispielsweise Pasten, deren Feststoffanteile jeweils von einem Gemisch eines Metallpulvers und eines Keramikpulvers gebildet werden.

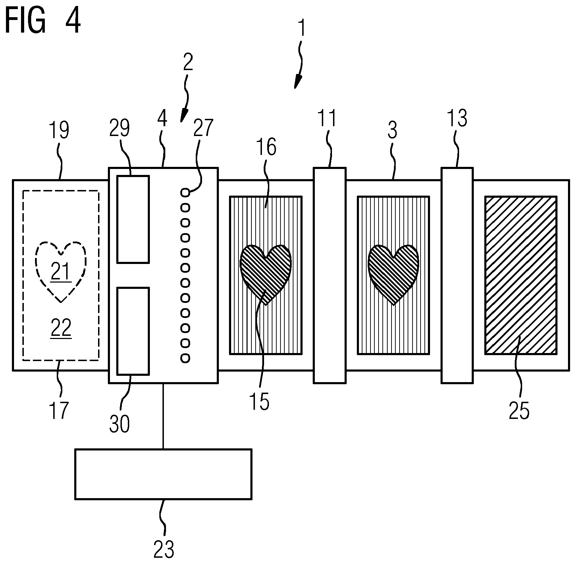

Figur 4 zeigt schematisch ein Ausführungsbeispiel einer Fertigungsanlage 1 zum Herstellen von Elektroblechen 3 gemäß dem zweiten Ausführungsbeispiel des Verfahrens. Die Fertigungsanlage 1 umfasst eine Materialaufbringvorrichtung 2, eine Sintereinheit 11 und eine Lackiereinheit 13. Im Unterschied zu der in Figur 2 gezeigten Fertigungsanlage 1 ist die Materialaufbringvorrichtung 2 dazu ausgebildet, die pastösen Ausgangsmaterialien 15, 16 lückenlos auf den Ausfüllbereich 17 der Sinterunterlage 19 zu spritzen, so dass auf je zwei aneinander grenzende Teilbereiche 21, 22 des Ausfüllbereichs 17 unterschiedliche Ausgangsmaterialien 15, 16 gespritzt werden. Dazu weist die Materialaufbringvorrichtung 2 eine Spritzeinheit 4 und eine Steuereinheit 23 auf. Die Spritzeinheit 4 weist von der Steuereinheit 23 steuerbare Spritzdüsen 27 auf, mit denen die Ausgangsmaterialien 15, 16 auf die Sinterunterlage 19 gespritzt werden. Die Spritzdüsen 27 werden aus Pastenkammern 29, 30 mit den Ausgangsmaterialien 15, 16 versorgt, wobei die Ausgangsmaterialen 15, 16 separat voneinander in verschiedenen Pastenkammern 29, 30 gelagert sind und die Spritzdüsen 27 jeweils mit jeder der Pastenkammern 29, 30 verbindbar sind, so dass aus jeder Spritzdüse 27 wahlweise eines der Ausgangsmaterialien 15, 16 ausgebbar ist.

In einem ersten Verfahrensschritt 201 wird analog zu dem ersten Ausführungsbeispiel ein Aufteilungsmuster der Aufteilung des Ausfüllbereichs 17 in die Teilbereiche 21, 22 mit einer Zuordnung jedes Teilbereichs 21, 22 zu einem Ausgangsmaterial 15, 16 erstellt und, beispielsweise in Form digitaler Daten, in einem Speicher der Steuereinheit 23 abgelegt.

In einem zweiten Verfahrensschritt 202 werden die Ausgangsmaterialien 19 gleichzeitig oder nacheinander mit der Spritzeinheit 4 auf die Sinterunterlage 19 gespritzt, wobei die Spritzdüsen 27 gemäß dem Aufteilungsmuster derart von der Steuereinheit 23 gesteuert werden, dass jeder Ausfüllbereich 21, 22 mit dem ihm zugeordneten Ausgangsmaterial 15, 16 bespritzt wird.

In einem dritten Verfahrensschritt 203 werden die auf die Sinterunterlage 19 gespritzten Ausgangsmaterialien 15, 16 getrocknet.

In einem vierten Verfahrensschritt 204 werden die auf den Ausfüllbereich 17 aufgebrachten Ausgangsmaterialien 15, 16 mit der Sintereinheit 13 gesintert und dadurch zu dem Elektroblech 3 gehärtet und verbunden.

In einem fünften Verfahrensschritt 205 wird das Elektroblech 3 von der Lackiereinheit 13 mit einem elektrisch isolierenden Lack 25, beispielsweise einem Backlack, beschichtet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Herstellen eines Elektroblechs (3), wobei
- wenigstens zwei unterschiedliche metallhaltige sinterfähige Ausgangsmaterialien (15, 16) lückenlos auf einen Ausfüllbereich (17) einer Sinterunterlage (19) aufgebracht werden, wobei auf je zwei aneinander grenzende Teilbereiche (21, 22) des Ausfüllbereichs (17) unterschiedliche Ausgangsmaterialien (15, 16) aufgebracht werden,
- und die auf den Ausfüllbereich (17) aufgebrachten Ausgangsmaterialien (15, 16) durch Sintern zu dem Elektroblech (3) gehärtet und verbunden werden.

2. Verfahren nach Anspruch 1, wobei die Ausgangsmaterialien (15, 16) Pasten sind.

3. Verfahren nach Anspruch 2, wobei die Ausgangsmaterialien (15, 16) mit Spritzdüsen (27) auf die Sinterunterlage (19) gespritzt werden.

4. Verfahren nach Anspruch 3, wobei ein Aufteilungsmuster der Aufteilung des Ausfüllbereichs (17) in die Teilbereiche (21, 22) mit einer Zuordnung jedes Teilbereichs (21, 22) zu einem Ausgangsmaterial (15, 16) erstellt wird und die Spritzdüsen (27) gemäß dem Aufteilungsmuster derart gesteuert werden, dass jeder Teilbereich (21, 22) mit dem ihm zugeordneten Ausgangsmaterial (15, 16) bespritzt wird.

5. Verfahren nach Anspruch 3 oder 4, wobei die auf die Sinterunterlage (19) gespritzten Ausgangsmaterialien (15, 16) vor dem Sintern getrocknet werden.

6. Verfahren nach Anspruch 1, wobei die Ausgangsmaterialien (15, 16) Pulver sind.

7. Verfahren nach Anspruch 6, wobei die unterschiedlichen Ausgangsmaterialien (15, 16) nacheinander auf jeweils mindestens einen Teilbereich (21, 22) des Ausfüllbereichs (17) aufgebracht werden.

8. Verfahren nach Anspruch 7, wobei jedes Ausgangsmaterial (15, 16) auf den mindestens einen Teilbereich (21, 22) des Ausfüllbereichs (17) aufgebracht wird, indem das Ausgangsmaterial (15, 16) zunächst über dem gesamten Ausfüllbereich (17) aufgetragen wird, danach ein Bindermaterial über dem mindestens einen Teilbereich (21, 22) in das Ausgangsmaterial (15, 16) eingedruckt wird, anschließend das Bindermaterial ausgehärtet wird und abschließend das nicht mit Bindermaterial verfestigte Ausgangsmaterial (15, 16) entfernt wird.

9. Verfahren nach Anspruch 8, wobei das Bindermaterial durch einen chemischen Prozess ausgehärtet wird.

10. Verfahren nach Anspruch 8 oder 9, wobei dem Bindermittel zum Aushärten Energie zugeführt wird.

11. Verfahren nach Anspruch 10, wobei die Energie durch Bestrahlung mit Ultraviolettstrahlung zugeführt wird.

12. Verfahren nach einem der Ansprüche 8 bis 11, wobei das Bindermittel mit Spritzdüsen (27) in ein Ausgangsmaterial (15, 16) gespritzt wird.

13. Verfahren nach Anspruch 12, wobei ein Aufteilungsmuster der Aufteilung des Ausfüllbereichs (17) in die Teilbereiche (21, 22) mit einer Zuordnung jedes Teilbereichs (21, 22) zu einem Ausgangsmaterial (15, 16) erstellt wird und die Spritzdüsen (27) für jedes Ausgangsmaterial (15, 16) gemäß dem Aufteilungsmuster derart gesteuert werden, dass Bindermaterial über jedem dem Ausgangsmaterial (15, 16) zugeordneten Teilbereich (21, 22) in das Ausgangsmaterial (15, 16) gespritzt wird.

14. Verfahren nach einem der vorhergehenden Ansprüche, wobei das Elektroblech (3) nach dem Sintern mit einem elektrisch isolierenden Lack (25) beschichtet wird.

15. Fertigungsanlage (1) zum Herstellen eines Elektroblechs (3) gemäß dem Verfahren nach einem der vorhergehenden Ansprüche, die Fertigungsanlage (1) umfassend
- eine Materialaufbringvorrichtung (2), die dazu eingerichtet ist, die Ausgangsmaterialien (15, 16) lückenlos auf den Ausfüllbereich (17) der Sinterunterlage (19) derart aufzubringen, dass auf je zwei aneinander grenzende Teilbereiche (21, 22) des Ausfüllbereichs (17) unterschiedliche Ausgangsmaterialien (15, 16) aufgebracht werden,
- und eine Sintereinheit (11), die dazu eingerichtet ist, die auf den Ausfüllbereich (17) aufgebrachten Ausgangsmaterialien (15, 16) durch Sintern zu dem Elektroblech (3) zu härten und zu verbinden.
